# EUROPÄISCHE PATENTSCHRIFT

(11) **EP 1 731 450 B1**
(45) Veröffentlichungstag und Bekanntmachung des Hinweises auf die Patenterteilung: **23.07.2008**
(21) Anmeldenummer: 06010149.0
(22) Anmeldetag: 17.05.2006
(51) Int. Cl.: B65G 17/26, B65G 47/28, B65B 21/06

(54) **Vorrichtung zum Aufteilen, Eintakten und Gruppieren von Stückgütern**
Device for separating, transporting and grouping articles
Dispositif pour séparer, transporter et grouper des articles

(30) Priorität: 09.06.2005 DE 102005026639
(43) Veröffentlichungstag der Anmeldung: 13.12.2006
(73) Patentinhaber: KHS AG, 44143 Dortmund (DE)
(72) Erfinder: Lechner, Tilo, 46446 Emmerich (DE); Pauls, Ludger, 6595 Ven-Zelderheide (NL)

(56) Entgegenhaltungen:
- EP-A- 0 608 102
- EP-A- 1 067 048
- DE-A1- 2 110 819
- US-A- 4 660 350

## Beschreibung

Die Erfindung bezieht sich auf eine Vorrichtung zum Aufteilen, Eintakten und Gruppieren von Stückgütern, Schachteln, Werkstücken oder Artikeln wie Flaschen, Dosen und dergleichen mit einem Förderer, auf dem ein Artikelstrom geführt wird und mit diesem Förderer zusammenwirkenden Aufteilelementen, die an einer vorbestimmbaren Stelle des Förderers hinter oder zwischen die Stückgüter eingreifend bewegbar sind und diese einzeln, reihen- oder gruppenweise aufteilen, wobei die Abstände der Aufteilelemente veränderbar und unterschiedliche Gruppengrößen herstellbar und die Aufteilelemente oder Aufteilfinger an vorzugsweise unabhängig von dem Artikelförderer umlaufenden Förderern oder Förderketten gehalten sind.

Im Bereich der industriellen Fertigung gibt es zahlreiche Situationen, in denen hergestellte oder zu Verbrauchseinheiten zusammengestellte oder abgefüllte Produkte zu größeren Transport-, Vertriebs-, bzw. Verkaufseinheiten zusammengeführt werden müssen. Insbesondere in der Getränkeindustrie müssen eine Vielzahl von Flaschen, Dosen und dergleichen in Kisten, Kartons, Trays oder Schrumpffolien verpackt werden. Zur Durchführung dieser Verpackungsaufgaben, die vorwiegend von Einpack-, Verpackungs- oder Palettiermaschinen vorgenommen werden, ist es notwendig, einen vorzugsweise kontinuierlich an die Verpackungsmaschine herangeführten Produktstrom in bestimmte Gruppen- bzw. Formationsgrößen entsprechend ihrer späteren Lage in einer Verpackung oder auf einer Palette aufzuteilen. In diesem Zusammenhang ist eine teilungsgerechte Positionierung sowie eine entsprechende Synchronisation der formatierten oder einzelnen Stückgüter in Bezug auf den vorgegebenen Maschinentakt erforderlich. Zur Lösung dieser Aufgabenstellung sind bereits unterschiedliche Vorrichtungen vorgeschlagen worden.

### Stand der Technik

So zeigt die DE-PS 30 29 508 eine Vorrichtung zum Gruppieren von in großer Anzahl anfallender Flaschen zum Verpacken in Kisten oder Kartons u. dgl. Behälter. Um dabei unterschiedliche Artikel und Gebindegrößen verarbeiten zu können, ist zwischen der Verpackungsmaschine und dem Zuförderband eine Gruppiervorrichtung angeordnet, die mehrere radial zu einer Antriebswelle hin verschiebbar gelagerte Stangen aufweist, an deren Ende Aufteilfinger angeordnet sind, die in den einlaufenden Artikelstrom eingreifen und entsprechende Artikelgruppen abteilen. Die Aufteilfinger sind zusätzlich durch eine Umlaufführung gelenkt. Zur Erstellung unterschiedlicher Gebindegrößen ist sowohl die Antriebswelle als auch die Umlaufführung versetz- und umstellbar, so dass die Eintauchpunkte der Aufteilfinger in den Artikelstrom und deren Abtauchpunkte aus den abgeteilten Artikelgruppen synchron durch gleichzeitige Verstellung der Antriebswelle und der Umlaufführung definiert werden. Zur Einstellung wird die Antriebswelle senkrecht zur Förderbahn verstellt und die Umlaufführung zeitgleich gespreizt oder gestaucht. Nachteilig bei dieser bekannten Vorrichtung ist, dass die Aufteilfinger während der Abteilung der Artikelgruppen von dem Artikelstrom große Geschwindigkeits- und Beschleunigungsänderungen durchlaufen, die dazu führen, dass die Artikel der Bewegung der Aufteilfinger nicht ohne weiteres folgen können und demzufolge stellenweise unkontrollierte Bewegungen ausführen oder gegeneinander schlagen und gegebenenfalls umstürzen.

Im Rahmen der vorliegenden Anmeldung sind unter dem durchgängig benutzten Begriff "Aufteilfinger" alle Elemente zu verstehen, welche in einen Produktstrom eingefügt werden, um diesen aufzuteilen, aufzutrennen oder auch zu positionieren. Dabei kann es sich um stiftförmige, stabförmige oder auch sonstige Elemente handeln, welche in den Produktstrom von oben, unten oder auch aus einer seitlichen Richtung eingefügt werden.

Aus der DE-PS 34 14 607 ist ferner eine entsprechende Vorrichtung bekannt geworden, die nach einem vergleichbaren Prinzip arbeitet. Durch die zusätzliche Anordnung von Schlepphebeln in Kombination mit einem äußeren Drehrad und einer nicht einstellbaren Umlaufführung ist es möglich, die Aufteilfinger mit einer gleichmäßigeren Geschwindigkeit zu betreiben. Allerdings ist diese Vorrichtung in ihrem Aufbau durch die Vielzahl der weiteren Bauteile sehr aufwändig.

Eine weitere Vorrichtung zum Gruppieren und Eintakten von Gegenständen ist aus der DE 298 16 128 U1 bekannt geworden. Als Transportmittel für die Aufteilfinger dient eine in ihrer Länge veränderbare Laschenkette.

Abweichend von der üblichen Bauart von Laschenketten, bei welcher die Verbindungsbolzen zu den jeweiligen Nachbar-Kettengliedern in Bohrungen gelagert sind, weisen die Laschen der vorgeschlagenen Laschenkette einseitig Langlöcher auf. Bedingt durch diese Langlöcher kann der Abstand der Verbindungsbolzen eines Kettengliedes verkürzt werden, wodurch sich auch eine Verkürzung der gesamten Kettenlänge ergibt.

Zur Realisierung einer Längenänderung der Laschenkette weisen die Kettenglieder seitlich hinausragende Steuerzapfen auf, welche die in Gewindegänge einer allein die Steigung bestimmenden Förderschnecke eingreifen. Diese ist synchron zur Förderkette antreibbar und bestimmt auf ihrer wirksamen Länge die jeweilige Transportgeschwindigkeit der Mitnehmer und auch deren Abstand sowie auch deren Abstandsbildung. Dabei ist zu beachten, dass die Verkürzung der Laschenkette lediglich im Bereich der Förderschnecke wirksam werden kann.

Nachteilig ist bei dieser bekannten Vorrichtung das labile Verhalten der einzelnen Laschen und deren Langlöcher zueinander und die dadurch erzeugte permanente Lärmbelästigung sowie der nicht zu vermeidende erhöhte Verschleiß der eingesetzten Bauteile. Diese Nachteile lassen sich auch nicht durch besondere Beschichtungsmaßnahmen zum Vermindern von Bewegungsgeräuschen an sich berührenden Bauteilen beseitigen. Von weiterem Nachteil ist die starre Bestimmung der einzelnen Gruppierungsabstände durch den festliegenden Verlauf der Steigung der Fördernut bzw. des Ganges der Förderschnecke, wodurch eine Änderung der Gruppierungsabstände einen Austausch der Förderschnecke zwingend erforderlich macht, was einen nicht unerheblichen Montageaufwand bedingt.

Bei der US-A-4 660 350 ist eine Vorrichtung bekannt, in dem die Förderskette in eine ertsen und eine zweite Ebene zwangsgeführt ist, wobei die zwei Ebenen auf einen veränderten Abstand bringbar sind, um so einer Längenänderung der Laschenkette zu realisieren.

### Aufgabenstellung

Ausgehend von diesem Stand der Technik und den sich daraus ergebenden Problemgestellungen liegt der vorliegenden Erfindung unter Vermeidung der beschriebenen Nachteile die Aufgabe zugrunde, eine vereinfachte Vorrichtung zur Handhabung von Gegenständen bei deren Einteilung, Eintaktung oder Gruppierung und dgl. zu schaffen, wobei eine hohe Umlaufgeschwindigkeit bei dennoch leichter und schneller Umstellbarkeit auch bei einer großen Produktvielfalt gewährleistet sein soll.

Diese der Erfindung zugrunde liegende Aufgabe wird bei einer Vorrichtung zum Aufteilen, Eintakten und Gruppieren von Stückgütern durch die kennzeichnenden Merkmale des Anspruchs 1 sowie auch dadurch gelöst, dass die Förderkette eine erste Laschenlagerung oder Gliederlagerung mit an Führungsbahnen zwangsgeführten Gleitmitteln aufweist und eine korrespondierende weitere Laschenlagerung die jeweiligen Aufteilfinger aufnimmt und mit ihren Gleitmitteln entlang einer zweiten Führungsbahn bewegbar ist und mindestens die zweite Führungsbahn relativ zu der ersten Führungsbahn höhenmäßig zur Abstandsveränderung der Aufteilfinger bewegbar gelagert ist.

Mit dieser Ausgestaltung und der nach den Merkmalen des Anspruchs 1 ist in Verbindung mit denen der Unteransprüche eine wesentlich verbesserte und vereinfachte Umstellung und Anpassung an unterschiedliche Formatierung- und Synchronisations- Aufgaben bei einer wesentlich verbesserten Laufeigenschaft einer solchen Vorrichtung gewährleistet.

### Ausführungsbeispiel

Weitere Merkmale und Einzelheiten der Erfindung ergeben sich aus der nachfolgenden Beschreibung bevorzugter Ausführungsbeispiele sowie anhand der Zeichnung. Dabei bilden die beschriebenen und/oder bildlich dargestellten Merkmale für sich oder in geeigneter Kombination den Gegenstand der Erfindung. In der Zeichnung zeigt in dimetrischer Darstellung:
Figur 1 eine Vorrichtung mit auf ihrem größten Abstand geführten Aufteilfingern,
Figur 2 die Aufteilfinger in einem engen Abstand,
Figur 3 die Aufteilfinger in Kombination mit Klemmfingern und kleinem Stückgut und
Figur 4 die Aufteilfinger in Kombination mit Klemmfingern und großem Stückgut.

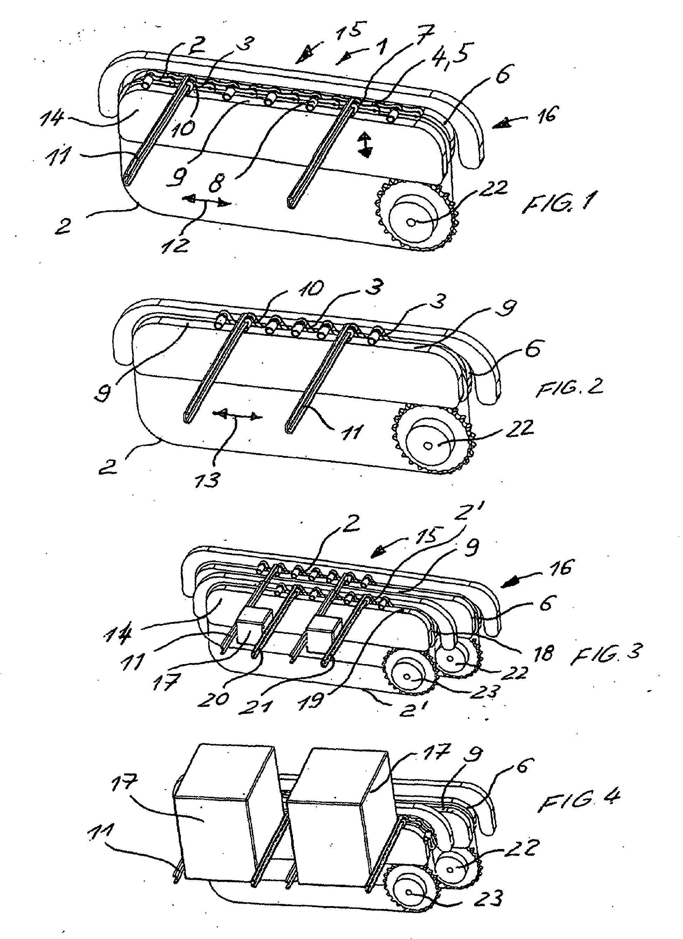

Gemäß dem in Figur 1 dargestellten Ausführungsbeispiel besteht die Vorrichtung zum Aufteilen, Eintakten und Gruppieren von Stückgütern - im Nachfolgenden als Aufteilvorrichtung bezeichnet ― aus einem nicht weiter dargestellten Förderer, wie er beispielsweise in der DE 103 47 540 A1 beschrieben ist und deren Inhalt, soweit dieser zur Ergänzung und der Erläuterung der Erfindung sowie dieser Beschreibung geeignet ist, entsprechend herangezogen wird.

Mindestens einseitig ist an einem derartigen Förderer die eigentliche Aufteilvorrichtung 1 angeordnet. Diese weist eine Förderkette 2 in Form einer Laschenkette mit Laschen 3 auf.

Die zu einem Kettenglied gehörenden Laschen 3 sind an ihren Enden, in an sich bekannter Weise, mittels gelenkiger Verbindung mit den Nachbar-Kettengliedern verbunden. In ebenfalls bekannter Weise bildeten die gelenkigen Verbindungen ebenfalls die Wirk- oder Angriffsflächen für die, die Förderkette 2 antreibenden Kettenräder, wozu die gelenkigen Verbindungen beispielsweise mit Verbindungsbolzen oder ähnlichem ausgestattet sind.

Erfindungsgemäß ist vorgesehen, zumindest einige dieser gelenkigen Verbindungen mit Lagerungselementen, nachfolgend Laschenlagerungen 4, 7 genannt, auszustatten. Dabei ist beispielsweise vorgesehen, diese Laschenlagerungen 4, 7 ― in Förderrichtung der Förderkette 2 gesehen, beidseitig anzuordnen, wobei jede gelenkige Verbindung maximal an einer Seite mit einer Laschenlagerung 4 auszustatten ist.

Beispiels weise ist eine erste Laschenlagerung 4 einen Gleitbolzen oder eine Gleitrolle 5 auf, die an einer ersten Führungsbahn 6 entlang gleiten. Mit dieser Laschenlagerung 4 korrespondiert eine weitere Laschentagerung 7, die mit einem weiteren Gleitbolzen 8 entlang einer zweiten Führungsbahn 9 geführt ist.

Je nach Länge einer solchen Lasche 3 können an jeder Lasche 3 oder nach mehreren Zwischenlaschen an einer dann folgenden Lasche 10 die eigentlichen Aufteilfinger 11 angeordnet sein. Diese sind vorzugsweise achsgleich zu einem Gleitbolzen 8 angeordnet. Mindestens eine Führungsbahn 6 oder 9 ist relativ zueinander, vorzugsweise höhenmäßig zur Abstandsveränderung der Aufteilfinger 11 bewegbar gelagert. Bei einer höhenmäßigen Verstellung mindestens der zweiten Führungsbahn 9 ändert sich die in Figur 1 erkennbare geradlinige Erstreckung der Förderkette 2 in eine etwa spitzwinkelige Erstreckung der Laschen 3 gemäß Figur 2.

Entsprechend verändert der sich aus einer geradlinigen Erstreckung ergebende weite Abstand 12 der Aufteilfinger 11 in einen geringeren Abstand 13, wie aus Figur 2 erkennbar. Die Führungsbahnen 6 und/oder 9 sind zweckmäßig kontinuierlich verstellbar. Es ist beispielsweise vorgesehen, dass die erste Führungsbahn 6 ortsfest angeordnet ist und die zweite Führungsbahn 9 höhenverstellbar und zur Förderbahn weisend gelagert ist. Zur Stabilisierenden Lagerung der Kette ist mindestens die erste Führungsbahn 6 als Nutkurvenbahn ausgeführt. Es können aber auch beide Führungsbahnen 6,9 mindestens teilweise geschlossene Nutkurvenbahnen bilden.

Mindestens eine verstellbare Führungsbahn 6 oder 9 ist zusätzlich mit ihrem Anfangs- 14 und/oder Gesamtbereich 15 neigbar gelagert, was eine besonders vorteilhafte Feineinstellung zulässt. Eine entsprechende Neigung kann auch für den auslaufseitigen Bereich 16 vorgesehen sein. Die Aufteilfinger 11 sind zweckmäßig zur Anpassung an unterschiedliche und optimale Anlegepositionen gegen die Stückgüter 17 zusätzlich durch gemeinsame Verstellung der Führungsbahnen 6,9 höhenveränderbar an dem Förderer gelagert, wobei die Abstände der Aufteilfinger 11 und/oder deren Anlegeposition im Verhältnis zu den zur Verarbeitung gelangenden Stückgütern 17 automatisch einstellbar ist. Dieses kann beispielsweise mit Eingabe der gewünschten Formation in die zugeordnete Verpackungsmaschine von deren Steuerungsautomatik direkt erfolgen. Die sich durch die unterschiedliche Abstandsbildung 12,13 und die damit verbundene Winkeländerung ergebende Kettenlängenveränderung wird durch entsprechende Kettenspanner oder Kettenspeicher ausgeglichen.

Wie aus Figur 3 und 4 ersichtlich, ist dem ersten Paar von Führungsbahnen 6,9 zur eigentlichen Abstandsbildung und Eintaktung der Aufteilfinger 11 ein weiteres Paar solcher Führungsbahnen 18,19 mit einer weiteren Förderkette 2' zugeordnet. Dieses weitere Paar ist ausschließlich zur Steuerung und Lenkung zusätzlicher Führungs-und Klemmfinger 20,21 vorgesehen. Dieses Paar kann, wie Figur 3 zeigt, gleichseitig zu dem ersten Paar oder auch gegenüberliegend auf der anderen Seite des Förderers angeordnet sein. Die Zusammenarbeit dieser Finger 11,20,21 ist derart ausgelegt, dass der Aufteilfinger 11 eine schiebende und abteilende und die Führungs- und Klemmfinger 20,21 eine zentrierende oder positionierende Aufgabe während des Abteilprozesses übernehmen. Dabei ist vorgesehen, dass die Abstandsbildung der Stückgüter 17 und deren Zentrierung oder Klemmung zeitlich parallel oder annähernd parallel zueinander erfolgt. Die Förderketten 2,2' werden zweckmäßig durch je einen eigenen Motor 22,23 angetrieben. Hierbei kann es sich um einen Synchron-, Servo- oder Schrittmotor, deren Drehrichtung, Umlaufgeschwindigkeit, Teil- oder Gesamtdrehwinkel und weitere Parameter durch einen Rechner oder eine andere geeignete Steuervorrichtung vorgegeben werden, handeln. Die Steuervorrichtung ist zweckmäßig mit der Steuervorrichtung einer Verpackungsmaschine, die als Leitmaschine dienen kann, elektrisch oder steuerungstechnisch verbunden, so dass auch eine Anpassung der Aufteilvorrichtung an unterschiedliche Soll-Situationen unverzüglich und automatisch vorgenommen werden kann.

Insbesondere bei größeren oder schwergewichtigen Stückgütern 17 können auf einander gegenüberliegenden Seiten des Förderers mindestens je ein Paar von Führungsbahnen 6,9 und 18,19 angeordnet sein, wobei die Aufteil- und/oder Führungsfinger 11,20,21 als über den Förderer führende Querstäbe ausgebildet sind.

Anstelle der vorbeschriebenen Laschenkette 2,2' können entsprechend geeignete Gliederketten, Zahnriemen oder dgl. Transportmittel mit entsprechend angeordneten Aufteil- und Führungsfingern 11,20,21 vorgesehen sein.

## Patentansprüche

1. Vorrichtung zum Aufteilen, Eintakten und Gruppieren von Stückgütern, Schachteln, Werkstücken oder Artikeln wie Flaschen, Dosen und dergleichen mit einem Förderer, auf dem ein Artikelstrom geführt wird und mit diesem Förderer zusammenwirkenden Aufteilelementen oder Aufteilfingern, die an einer vorbestimmbaren Stelle des Förderers hinter oder zwischen die Stückgüter eingreifend bewegbar sind und diese einzeln, reihen- oder gruppenweise aufteilen, wobei die Abstände der Aufteilelemente veränderbar und unterschiedliche Gruppengrößen herstellbar sind und die Aufteilelemente oder Aufteilfinger an unabhängig von dem Artikelförderer umlaufenden Förderketten oder dgl. gehalten sind, **dadurch gekennzeichnet, dass** die Förderkette (2) mit einer ersten Laschenlagerung (4) in einer ersten Ebene (6) zwangsgeführt ist und mit einer korrespondierenden weiteren Laschenlagerung (7) in einer zweiten Ebene (9) geführt ist und die erste und zweite Ebene (6,9) zueinander auf einen gleichen und veränderten Abstand bringbar sind.

2. Vorrichtung nach dem Oberbegriff des Anspruchs 1, **dadurch gekennzeichnet, dass** die Förderkette (2) eine erste Laschenlagerung (4) oder Gliederlagerung mit an Führungsbahnen (6,9) zwangsgeführten Gleitmitteln (5) aufweist und die korrespondierende weitere Laschenlagerung (7) die jeweiligen Aufteilfinger (11) aufnimmt und mit ihren Gleitmitteln (8) entlang einer zweiten Führungsbahn (9) bewegbar ist und mindestens die zweite Bahn relativ zu der ersten Bahn höhenmäßig zur Abstandsveränderung (12,13) der Aufteilfinger (11) bewegbar gelagert ist

3. Vorrichtung nach Anspruch 1 oder 2, **dadurch gekennzeichnet, dass** die miteinander korrespondierenden Laschen (3) von einer geradlinigen Erstreckung bis hin zu einer spitzwinkeligen Erstreckung kontinuierlich verstellbar sind.

4. Vorrichtung nach einem der vorhergehenden Ansprüche, **dadurch gekennzeichnet, dass** die Winkelverstellung durch Veränderung des Abstandes der Führungsbahnen (6,9) zueinander definiert ist.

5. Vorrichtung nach einem der vorhergehenden Ansprüche, **dadurch gekennzeichnet, dass** der ersten Laschenlagerung (4) der Förderkette (2) ein Lager- oder Gleitbolzen (5) zugeordnet ist, der an einer ortsfesten Führungsbahn (6) geführt ist und eine weitere Laschenlagerung (7) ebenfalls einen weiteren Gleitbolzen (8) aufweist, der an einer höhenverstellbaren zweiten Führungsbahn (9) geführt und einer dieser weiteren Laschenlagerung (7) der eigentliche Aufteilfinger (11) zugeordnet ist.

6. Vorrichtung nach einem der vorhergehenden Ansprüche, **dadurch gekennzeichnet, dass** der Aufteilfinger (11) achsgleich zum Gleitbolzen (8) gelagert ist.

7. Vorrichtung nach einem der vorhergehenden Ansprüche, **dadurch gekennzeichnet, dass** mindestens die erste Führungsbahn (6) als Nutkurvenbahn ausgebildet ist.

8. Vorrichtung nach einem der vorhergehenden Ansprüche, **dadurch gekennzeichnet, dass** beide Führungsbahnen (6,9) als mindestens teilweise geschlossene Nutkurvenbahnen ausgeführt sind.

9. Vorrichtung nach einem der vorhergehenden Ansprüche, **dadurch gekennzeichnet, dass** die Aufteilfinger (11) in Förderrichtung hinter die Stückgüter (17) zur Anlage verbringbar sind.

10. Vorrichtung nach einem der vorhergehenden Ansprüche, **dadurch gekennzeichnet, dass** die Aufteilfinger (11) eine schiebende und abteilende Wirkung auf die Stückgüter (17) ausüben und mit zusätzlichen zentrierenden und oder synchronisierenden Fingern (20,21) in Wirkungsverbindung stehen.

11. Vorrichtung nach einem der vorhergehenden Ansprüche, **dadurch gekennzeichnet, dass** dem ersten Paar von Führungsbahnen (6,9) für die Abstandsbildung der Aufteilfinger (11) ein weiteres Paar solcher Führungsbahnen (18,19) zugeordnet ist, welches ausschließlich zur Steuerung und Lenkung zusätzlicher Führungs- und/oder Klemmfinger (20,21) vorgesehen ist.

12. Vorrichtung nach einem der vorhergehenden Ansprüche mit einem ein- oder mehrzügigen Einteilband, einem nachfolgenden Beschleunigungsband und einem weiteren Förderer, **dadurch gekennzeichnet, dass** mit dem weiteren Förderer die Aufteilfinger (11) hinter die Stückgüter (17) zur eigentlichen Abstandsbildung anlegbar und in dem gleichen oder einem folgenden Förderabschnitt eine Klemmung der Stückgüter (17) vollziehbar ist.

13. Vorrichtung nach einem der vorhergehenden Ansprüche, **dadurch gekennzeichnet, dass** mindestens die abstandsbildende Führungsbahn (9) mit ihrem Anfangs- oder Gesamtbereich (14,15) neigbar gelagert ist.

14. Vorrichtung nach einem der vorhergehenden Ansprüche, **dadurch gekennzeichnet, dass** die abstandsbildende Führungsbahn (9) mit ihrem auslaufseitigen Bereich (16) neigbar gelagert ist.

15. Vorrichtung nach einem der vorhergehenden Ansprüche, **dadurch gekennzeichnet, dass** beide Führungsbahnen (6,9,18,19) gemeinsam zur Anpassung an unterschiedliche Anlegepositionen der Aufteil- und Zentrierfinger höhenveränderbar an dem Förderer gelagert sind.

16. Vorrichtung nach einem der vorhergehenden Ansprüche, **dadurch gekennzeichnet, dass** die Abstände der Aufteilfinger und/oder deren Anlegepositionen im Verhältnis zu den zur Verarbeitung gelangenden Stückgütern (17) automatisch einstellbar ist.

17. Vorrichtung nach einem der vorhergehenden Ansprüche, **dadurch gekennzeichnet, dass** mit Eingabe der gewünschten Formation in die zugeordnete Verpackungsmaschine eine automatische Anpassung der vor geschalteten Aufteilvorrichtung (1) erfolgt.

18. Vorrichtung nach einem der vorhergehenden Ansprüche, **dadurch gekennzeichnet, dass** die sich bei Winkeländerung der Laschen (3) zur Veränderung des Abstandes (12,13) der Finger (11,20,21) ergebende Kettenlängen- Änderung mittels eines Kettenspeichers ausgleichbar ist.

19. Vorrichtung nach einem der vorhergehenden Ansprüche, **dadurch gekennzeichnet, dass** aufeinander gegenüberliegenden Seiten eines Förderers mindestens je ein Paar von Führungsbahnen (8,9 und 18,19) angeordnet sind und die Führungsfinger (11,20,21) als darüber hinweggeführte Querstäbe ausgebildet sind.

20. Vorrichtung nach einem der vorhergehenden Ansprüche, **dadurch gekennzeichnet, dass** die Abstandsbildung der Stückgüter (17) und deren Zentrierung und/oder Klemmung zeitlich parallel oder annähernd zeitlich parallel erfolgt.

## Claims

1. Apparatus for the separating, individualising and grouping of items, boxes, workpieces or articles such as bottles, cans and the like, the said apparatus including a conveyor, on which a stream of items is guided, and separating elements or separating fingers, which interact with the said conveyor, are displaceable to a predeterminable position on the conveyor so as to engage behind or between the items and separate the said items individually, in rows or in groups, wherein the spacings between the separating elements are changeable and different group sizes are producible and the separating elements or separating fingers are retained on conveyor chains or the like that rotate independently of the article conveyor, **characterised in that** the conveyor chain (2) is forcibly guided in a first plane (6) by means of a first flat link bearing (4) and is guided in a second plane (9) by means of a corresponding additional flat link bearing (7) and the first and second plane (6, 9) are moveable towards each other by an identical and changed spacing.

2. Apparatus according to the main preamble of claim 1, **characterised in that** the conveyor chain (2) includes a first flat link bearing (4) or link bearing with sliding means (5) forcibly guided at guide paths (6, 9) and the corresponding additional flat link bearing (7) accommodates the respective separating fingers (11) and is displaceable along a second guide path (9) with its sliding means (8) and at least the second path is mounted relative to the first path so as to be displaceable in a vertical manner relative to the change in spacing (12, 13) between the separating fingers (11).

3. Apparatus according to claim 1 or 2, **characterised in that** the straps (3) that correspond with each other are continuously adjustable from a linear extension to an acute extension.

4. Apparatus according to one of the preceding claims, **characterised in that** the angular adjustment is defined by changing the spacing between the guide paths (6, 9) one relative to the other.

5. Apparatus according to one of the preceding claims, **characterised in that** a bearing bolt or sliding bolt (5) is associated with the first flat link bearing (4) of the conveyor chain (2), the said bearing bolt or flat link bearing (7) being guided at a fixed guide path (6), and an additional flat link bearing (7) also includes another sliding bolt (8), which is guided at a vertically adjustable second guide path (9) and the actual separating finger (11) is associated with one of the said additional flat link bearings (7).

6. Apparatus according to one of the preceding claims, **characterised in that** the separating finger (11) is mounted axially identically to the sliding bolt (8).

7. Apparatus according to one of the preceding claims, **characterised in that** at least the first guide path (6) is in the form of a cam path with groove.

8. Apparatus according to one of the preceding claims, **characterised in that** both guide paths (6, 9) are in the form of at least partially closed cam paths with groove.

9. Apparatus according to one of the preceding claims, **characterised in that** the separating fingers (11) are moveable for contact in the conveying direction behind the items (17).

10. Apparatus according to one of the preceding claims, **characterised in that** the separating fingers (11) exert a pushing, dividing effect on the items (17) and are in operational connection with additional centring or synchronising fingers (20, 21).

11. Apparatus according to one of the preceding claims, **characterised in that** an additional pair of guide paths (18, 19) is associated with the first pair of guide paths (6, 9) for forming the spacing between the separating fingers (11), the said additional pair of guide paths being provided exclusively for the control and guidance of additional guiding and/or clamping fingers (20, 21).

12. Apparatus according to one of the preceding claims with a single-track or multi-track dividing belt, a subsequent accelerating belt and an additional conveyor, **characterised in that** with the additional conveyor the separating finger (11) can be placed behind the items (17) for forming the actual spacing and a clamping of the items (17) is accomplishable in the same or a subsequent conveyor section.

13. Apparatus according to one of the preceding claims, **characterised in that** at least the guide path (9) forming the spacing is mounted so as to be inclinable in its start or overall region (14, 15).

14. Apparatus according to one of the preceding claims, **characterised in that** the guide path (9) forming the spacing is mounted so as to be inclinable in its region (16) on the outlet side.

15. Apparatus according to one of the preceding claims, **characterised in that** both guide paths (6, 9, 18, 19) are mounted so as to be vertically modifiable on the conveyor jointly for adaptation to different contact positions of the separating and centring fingers.

16. Apparatus according to one of the preceding claims, **characterised in that** the spacings between the separating fingers and/or their contact positions in relation to the items (17) passing for processing is automatically adjustable.

17. Apparatus according to one of the preceding claims, **characterised in that** with input of the desired formation into the associated packaging machine, the separating apparatus (1) upstream is automatically adapted.

18. Apparatus according to one of the preceding claims, **characterised in that** the change in chain length, produced when the strap (3) angle is changed to modify the spacing (12, 13) between the fingers (11, 20, 21), can be compensated for by means of a chain memory.

19. Apparatus according to one of the preceding claims, **characterised in that** at least one pair of guide paths (8, 9 and 18, 19) is disposed on each of the oppositely situated sides of a conveyor and the guide fingers (11, 20, 21) are in the form of cross bars that are guided away along them.

20. Apparatus according to one of the preceding claims, **characterised in that** the formation of spacing between the items (17) and their centring and/or clamping is effected parallel in time or approximately parallel in time.

## Revendications

1. Dispositif pour séparer, transporter et grouper des marchandises de détail, des boîtes en carton, des pièces à usiner ou des articles comme des bouteilles, des boîtes et similaires avec un convoyeur, sur lequel est conduit un flux d'articles, et des éléments de séparation ou des doigts de séparation coopérant avec ce convoyeur, qui peuvent se déplacer en entrant en prise à un endroit prédéfinissable du convoyeur derrière ou entre les marchandises de détail et les séparent individuellement, en séries ou en groupes, les distances entre les éléments de séparation pouvant être modifiées et des groupes de différente taille pouvant être réalisés et les éléments de séparation ou doigts de séparation étant maintenus sur des chaînes de convoyeur tournant indépendamment du convoyeur d'articles ou similaires, **caractérisé en ce que** la chaîne de convoyeur (2) est guidée de force avec un premier logement d'éclisse (4) dans un premier plan (6) et est guidée avec un autre logement d'éclisse (7) correspondant dans un deuxième plan (9) et les premier et deuxième plans (6, 9) peuvent être amenés l'un par rapport à l'autre à une distance égale et modifiée.

2. Dispositif selon le préambule de la revendication 1, **caractérisé en ce que** la chaîne de convoyeur (2) présente un premier logement d'éclisse (4) ou logement de maillon avec des moyens de glissement (5) guidés de force au niveau de bandes de guidage (6, 9) et l'autre logement d'éclisse (7) correspondant reçoit les doigts de séparation (11) respectifs et peut être déplacé avec ses moyens de glissement (8) le long d'une deuxième bande de guidage (9) et au moins la deuxième bande est logée de façon mobile en hauteur par rapport à la première bande en vue de la modification de la distance (12, 13) entre les doigts de séparation (11).

3. Dispositif selon la revendication 1 ou 2, **caractérisé en ce que** les éclisses (3) correspondant les unes avec les autres sont réglables en continu d'une extension rectiligne jusqu'à une extension en angle aigu.

4. Dispositif selon l'une quelconque des revendications précédentes, **caractérisé en ce que** le réglage angulaire est défini par la modification de la distance entre les bandes de guidage (6, 9) l'une par rapport à l'autre.

5. Dispositif selon l'une quelconque des revendications précédentes, **caractérisé en ce qu'**un boulon de palier ou de glissement (5) est associé au premier logement d'éclisse (4) de la chaîne de convoyeur (2), lequel boulon est guidé au niveau d'une bande de guidage (6) fixe et un autre logement d'éclisse (7) présente également un autre boulon de glissement (8), qui est guidé au niveau d'une deuxième bande de guidage (9) réglable en hauteur et le doigt de séparation (11) à proprement parler est associé à un de cet autre logement d'éclisse (7).

6. Dispositif selon l'une quelconque des revendications précédentes, **caractérisé en ce que** le doigt de séparation (11) est logé sur le même axe que le boulon de glissement (8).

7. Dispositif selon l'une quelconque des revendications précédentes, **caractérisé en ce qu'**au moins la première bande de guidage (6) est réalisée sous forme de bande courbe à rainure.

8. Dispositif selon l'une quelconque des revendications précédentes, **caractérisé en ce que** les deux bandes de guidage (6, 9) sont réalisées sous forme de bandes courbes à rainure au moins partiellement fermées.

9. Dispositif selon l'une quelconque des revendications précédentes, **caractérisé en ce que** les doigts de séparation (11) peuvent être amenés en appui dans le sens de transport derrière les marchandises de détail (17).

10. Dispositif selon l'une quelconque des revendications précédentes, **caractérisé en ce que** les doigts de séparation (11) exercent un effet de poussée et de division sur les marchandises de détail (17) et sont en liaison active avec des doigts de centrage et/ou de synchronisation (20, 21) supplémentaires.

11. Dispositif selon l'une quelconque des revendications précédentes, **caractérisé en ce qu'**une autre paire de telles bandes de guidage (18, 19), qui est prévue exclusivement pour la commande et la direction de doigts de guidage et/ou de serrage (20, 21) supplémentaires, est associée à la première paire de bandes de guidage (6, 9) d'espacement des doigts de séparation (11).

12. Dispositif selon l'une quelconque des revendications précédentes avec une bande de partage à un ou plusieurs tirants, une bande d'accélération placée en aval et un autre convoyeur, **caractérisé en ce que** les doigts de séparation (11) peuvent être placés avec l'autre convoyeur derrière les marchandises de détail (17) en vue de l'espacement proprement dit et un serrage des marchandises de détail (17) peut se dérouler dans la même section de transport ou dans une section de transport subséquente.

13. Dispositif selon l'une quelconque des revendications précédentes, **caractérisé en ce qu'**au moins la bande de guidage (9) formant l'espacement est logée de manière inclinable avec sa zone de début ou toute sa zone (14, 15).

14. Dispositif selon l'une quelconque des revendications précédentes, **caractérisé en ce que** la bande de guidage (9) formant l'espacement est logée de manière inclinable avec sa zone côté sortie (16).

15. Dispositif selon l'une quelconque des revendications précédentes, **caractérisé en ce que** les deux bandes de guidage (6, 9, 18, 19) sont logées ensemble au niveau du convoyeur de manière réglable en hauteur pour l'adaptation à différentes positions d'appui des doigts de séparation et de centrage.

16. Dispositif selon l'une quelconque des revendications précédentes, **caractérisé en ce que** les distances entre les doigts de séparation et/ou leurs positions d'appui peuvent être réglées automatiquement par rapport aux marchandises de détail (17) arrivant au traitement.

17. Dispositif selon l'une quelconque des revendications précédentes, **caractérisé en ce qu'**une adaptation automatique du dispositif de séparation (1) placé en amont a lieu avec la saisie de la formation souhaitée dans la machine d'emballage associée.

18. Dispositif selon l'une quelconque des revendications précédentes, **caractérisé en ce que** la modification de la longueur de la chaîne résultant lors de la modification angulaire des éclisses (3) pour la modification de la distance (12, 13) entre les doigts (11, 20, 21) peut être compensée à l'aide d'une réserve de chaîne.

19. Dispositif selon l'une quelconque des revendications précédentes, **caractérisé en ce qu'**au moins une paire de bandes de guidage (8, 9 et 18, 19) est associée à des côtés opposés superposés d'un convoyeur et les doigts de guidage (11, 20, 21) sont réalisés sous forme de barres transversales évacuées au-dessus de celles-ci.

20. Dispositif selon l'une quelconque des revendications précédentes, **caractérisé en ce que** l'espacement des marchandises de détail (17) et leur centrage et/ou serrage a lieu en parallèle dans le temps ou approximativement en parallèle dans le temps.
